# EUROPEAN PATENT SPECIFICATION

(11) **EP 0 354 562 B1**
(45) Date of publication and mention of the grant of the patent: **11.06.1997**
(21) Application number: 89114748.0
(22) Date of filing: 09.08.1989
(51) Int. Cl.: G05D 1/02

(54) **Automatic travelling apparatus**
Gerät zum automatischen Fahren
Appareil pour se déplacer automatiquement

(30) Priority: 10.08.1988 JP 199611/88; 10.08.1988 JP 199613/88
(43) Date of publication of application: 14.02.1990
(73) Proprietor: HONDA GIKEN KOGYO KABUSHIKI KAISHA, Minato-ku Tokyo (JP)
(72) Inventor: Asanuma, Yoshinobu, Wako-shi Saitama-ken (JP); Ishida, Shinnosuke, Wako-shi Saitama-ken (JP); Hasegawa, Hiroshi, Wako-shi Saitama-ken (JP)
(74) Representative: Prechtel, Jörg, Dipl.-Phys. Dr.

(56) References cited:
- Proceedings 1986 IEEE INTERNATIONAL CONFERENCE ON ROBOTICS AND AUTOMATION sponsored by IEEE Council on robotics and Automation April 7-10 1986 San Francisco pages 1615 - 1621; R. Wallace et al.: "Progress in robot road- following"
- 1986 Proccedings :FALL JOINT COMPUTER CONFERENCE November 2-6 1986 ;sponsored by ACM and Computer Society of the IEEE Dallas Texas pages 105 - 112; Y. Goto et al.: "CMU Sidewalk Navigation System: A Blackboard-Based Outdoor Navigation System Using Sensor Fusion with Colored-Range Images"

## Description

The present invention relates to an automatic travelling apparatus according to the preamble part of claim 1. Such an automatic travelling apparatus is, for example, known from an article titled "CMU Sidewalk Navigation System: A Blackboard-Based Outdoor Navigation System Using Sensor Fusion with Colored-Range Images" by Y. Goto et al., published with the 1986 proceedings: Fall Joint Computer Conference, November 2-6, 1986 (sponsored by ACM and Computer Society of the IEEE), Dallas, Texas, pages 105-113.

The automatic travelling apparatus according to this article uses the outputted relevant course information for a decision on a sensor and segmentation module, on a view frame and a resolution, and on an image input position as well as for the control of a pan-and-tilt mechanism.

A decision on the way to drive is effected only after a driving unit (e.g., a branch or a crossing) predicted by the relevant course information has been identified by a perception module. Possibly, the vehicle stops driving when it has reached the best place to detect the predicted driving unit and continues driving after the predicted driving unit has been identified. Since only the identified driving units are taken into account for the decision on the way the vehicle takes, abrupt changes in the heading of the vehicle might be necessary after identification of a predicted driving unit, leading to an unsmooth overall way of the vehicle.

From an article titled: "Progress in Robot Road-Following" by R. Wallace et al., published with the 1986 proceedings of the IEEE International Conference on Robotics and Automation (sponsored by IEEE Council on Robotics and Automation), April 7-10, 1986, San Francisco, pages 1615-1621, a further automatic travelling apparatus is known which is largely identical to the above-mentioned known automatic travelling apparatus.

From Japanese Patent Publication No. 58-42482 (compare also Japanese Patent Application Public Disclosure No. 62-140109) an automatic travelling system is known which uses an image pick-up device attached to a vehicle to steer the vehicle, thereby permitting it to follow a guideline which is laid on the road. Apparantly, such an automatic travelling system is useless on a road having no guideline.

From Japanese Patent Application Public Disclosure No. 62-70916 an automatic travelling system in the form of an automatic power lawn mower is known being equipped with an image pick-up device such as a video camera. While continuously taking images of the lawn area ahead the lawn mower, these images are treated to enhance the difference of shade between the finished and unfished areas, thereby permitting exact detection of the boundary between the finished and unfinished areas. The mower is steered to travel along the boundary thus detected. Accordingly, this automatic travelling system is capable of determining a course to follow, but this automatic travelling system is essentially the same as the automatic travelling system described above in respect of the vehicle which follows a single guideline laid on a road.

It is an object of the invention to provide an automatic travelling apparatus allowing continuous driving with no need for abrupt changes of the vehicle heading.

This object is achieved by the automatic travelling apparatus having the features of claim 1. As specified in the characterizing part of claim 1, the relevant course information is (also) used for setting a target course which gradually approaches the indicated way of the crossing or branch upon the output of the relevant course information, before the respective crossing or branch has been identified. Upon identification of said crossing or branch the target course is extended in the indicated way, and, since the indicated way has already been gradually approached, no abrupt change of the heading of the vehicle is necessary.

Features of preferred embodiments of the automatic travelling apparatus according to the invention, leading to further advantages, are defined in dependent claims 2 and 3.

Other objects and advantages of the present invention will be understood from the following description of an automatic travelling apparatus according to a preferred embodiment of the present invention which is shown in the accompanying drawings:
Fig. 1 is a block diagram of an automatic travelling apparatus according to one embodiment of the present invention;
Fig.2 is a block diagram of permissible area determining means;
Fig.3 shows one example of road determined from images taken by a video camera of a vehicle:
Fig.4 shows an image resulting from the projection transformation of the image of Fig.3;
Fig.5 shows one example of a target course set in the road;
Fig. 6(a) shows one example of a target course set in the road for a vehicle running at a decreased speed;
Fig. 6(b) shows one example of a target course set in the road for a vehicle running at an increased speed;
Fig. 7 shows the relation between a target course and a presumed course;
Fig.8 shows one example of course which the vehicle follows when a vehicle puts itself on a target course;
Fig.9 shows the manner in which a vehicle is travelling toward a Y-branch;
Figs. 10(a) to 10(b) show different travelling controls in different sections corresponding to those of Fig.9;
Fig. 11 is a block diagram showing a travelling system;
Fig. 12 shows one example of image appearing on the screen of a display unit;
Fig. 13 shows what marks appear on the screen of the display unit when travelling commands are inputted;
Fig. 14 shows a line L appearing in the X-Y coordinates; and
Fig. 15 shows a point appearing on the ρ-θ coordinates when the line L in Fig. 14 is subjected to the Hough conversion.

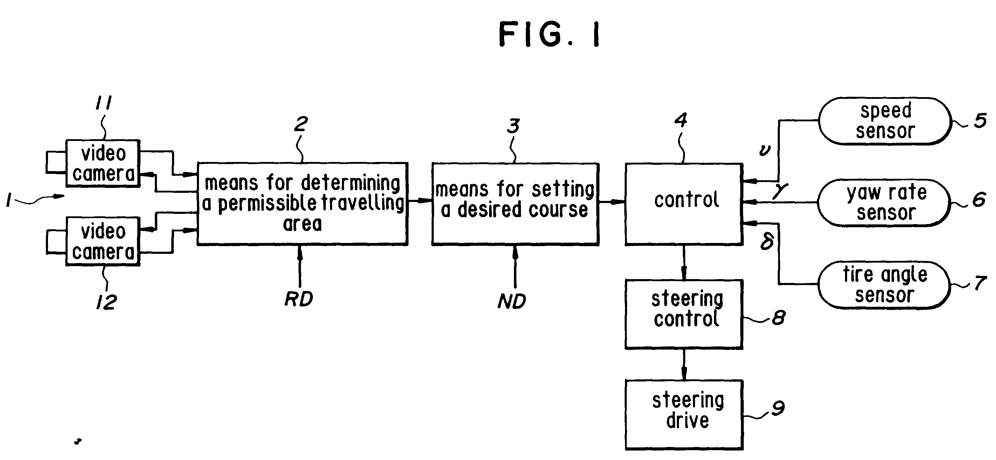

As shown in Fig. 1, an automatic travelling apparatus according to the present invention comprises: an image pickup device such as video cameras 11 and 12 attached to a vehicle for continuously picking up subsequent images of ground ahead of the vehicle; means 2 for processing the images taken by the video cameras and determining a permissible travelling area such as a road in the direction in which the vehicle is to travel; means 3 for setting a target course in the permissible travelling area thus determined; means 4 for determining the instantaneous running condition of the vehicle on the basis of an output signal from a speed sensor 5 representing the running speed "v" of the vehicle, an output signal from a yaw rate sensor 6 representing the yaw rate or angular velocity increment in yawing direction, and an output signal from a tire angle sensor 7 representing the tire angle 6 which varies with the steering of the vehicle, and for estimating, on the basis of the instantaneous running condition, a steering amount to permit the vehicle to follow the target course; and means 8 (and a steerage drive 9) for steering the vehicle with reference to the steering amount.

Actually, a computer aided control is used in place of means 2, 3 and 4, and means 8 can be included in the computer aided control, if occasions demand.

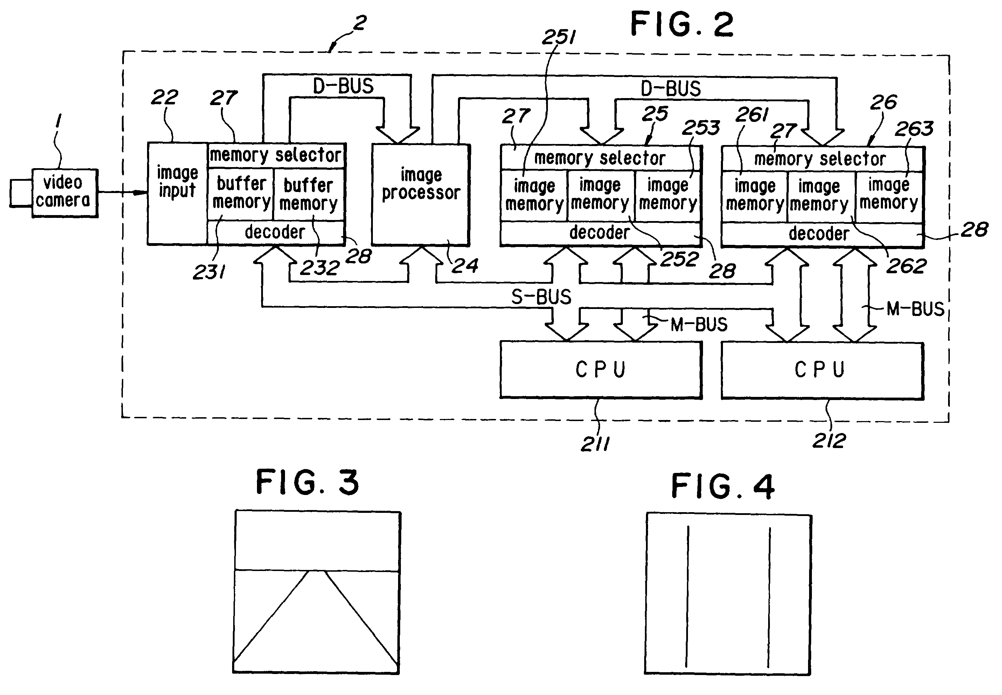

Fig.2 shows the structure of the permissible travelling area determining means 2 as comprising: first stage including image input 22, buffer memories 231, 232, memory selector 27 and decoder 28; second stage including image processor 24 connected to memory selector 27 of the first stage via D-bus (high-speed data bus); third stage including memory selector 27 image memories 251, 252 and 253 and decoder 28; fourth stage including memory selector 27, image memories 261, 262 and 263 and decoder 28, memory selectors 25 and 26 of the third and fourth stages being connected to the image processor 24 via D-bus; first and second CPUs 211 and 212 both connected to decoders 28 of the first, third and fourth stages via S-bus (system bus) and connected to decoders 28 of the third and fourth stages via M-bus (high-speed memory access bus).

In operation a series of image signals each representing a single image are supplied from the video cameras 11, 12 to the image input of the first stage, and then these image signals are stored alternately in the buffer memories 231 and 232 under the control of the CPUs 211 and 212. Then, these image informations are shifted to the image processor 24 one after another, where they are subjected to image processing, thereby detecting road edges in images if any, and determining a permissible travelling area as later described in detail. The image informations pertaining to permissible travelling areas are supplied to a group of image memories 251, 252 and 253 or a group of image memories 261, 262 and 263. Then, the contents of these memories are renewed by these latest image informations pertaining to permissible travelling areas. Thus, a series of image information pertaining to subsequent permissible travelling areas, over a predetermined distance which the vehicle runs, are stored in either memory group. The contents of either memory group 25 or 26 are transferred to means 3 for setting a target course in the permissible travelling area.

Parallel installations of two CPUs 211 and 212 and two buffer memories 231 and 232 permit alternate retrieval or storage of image informations to either buffer memory, as for example follows: while first image information stored in the buffer memory 231 are read under the control of the CPU 211, subsequent image information are stored in the buffer memory 232 under the control of the CPU 212. Thus, the inputting of image informations can be carried out on the real time basis.

Likewise, parallel installation of two groups of image memories 25 and 26 permit alternate retrieval or storage of image information to either memory group on the real time basis.

The determination of a permissible travelling area can be made as follows:

First, each image supplied from the video cameras will be subjected to differentiation process, and road edges if any, will be detected. Then, an automatic threshold setting circuit in the permissible travelling area detection means 2 sets a threshold value in consideration of road the degree of shade of the image information just processed. The road edge image will be subjected to binary transformation.

Alternatively, first, the images may be subjected to binary transformation, and then the binary data may be subjected to differentiation. In place of binary transformation poly-digitization may be performed to express some shade details of image.

Digitalized image information will be subjected to the Hough conversion to convert the X-Y linear coordinates to the corresponding ρ-θ point coordinates, thus eliminating isolated points and plotting to provide a continuous road edge image as shown in Fig.3.

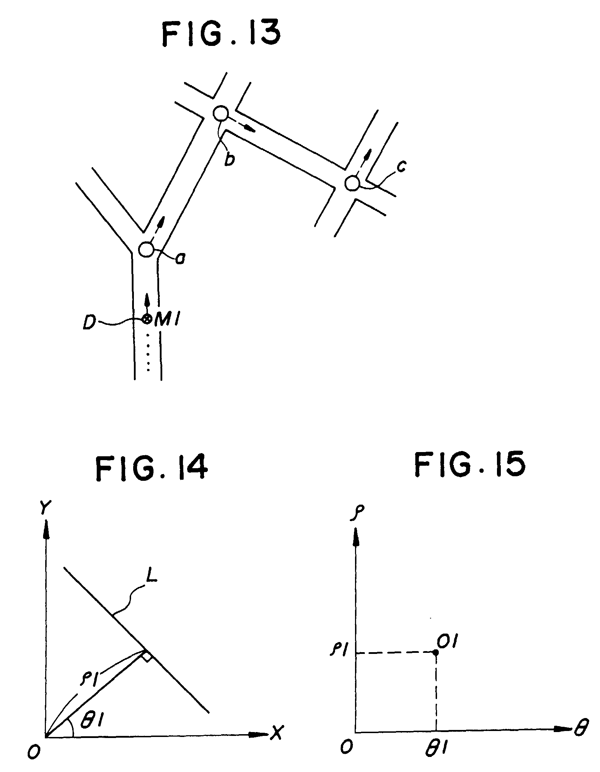

θ stands for an angle formed between the X-axis and a normal line extending from the origin of the X-Y coordinates perpendicular to the line, whereas ρ stands for the length of the normal line. For instance, the line L in the X-Y coordinates in Fig. 14 is expressed as the point 01 in the ρ-θ point coordinates in Fig. 15.

On that occasion edge tracing may be performed on the basis of binary-coded image information to obtain a continuous road edge. Hough conversion, edge tracing and other appropriate processings may be performed simultaneously, and then synthetic judgement may be made on the results of these processings to obtain a precise road edge information.

The image taken by a video camera represents a perspective view. The perspective road edge image as shown in Fig.3 can be converted to non-perspective road edge image as shown in Fig. 4 according to the projection conversion process. The area between contiguous road edges is a permissible travelling area.

After a permissible travelling area is determined by the permissible travelling area determining means 2, the target course setting means 3 will select a course most appropriate for running in the permissible travelling area, and will set the so selected course as a target course to follow.

Preferably, the course may be determined in consideration of the road contour and the running speed of the vehicle to meet the instantaneous travelling condition of the vehicle. However, the course may be basically determined in consideration of the width of the road as follows:

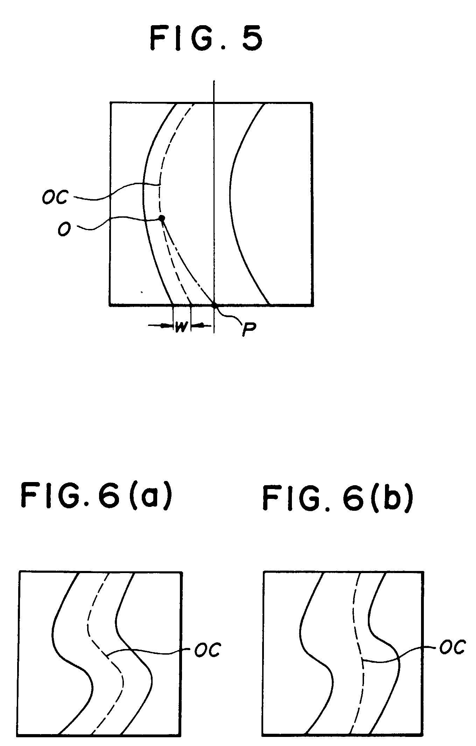

In case that the target course setting means 3 finds that the width of the road is above a predetermined extent, and that vehicles must keep to the left, a target course OC will be set a given constant distance "W" (for instance, 1.5 meters) apart from the left edge of the road, as shown in Fig.5.

In case that the width of the road is below the predetermined extent, a target course will be set along the center line of the road.

As the vehicle is running, the contents of the memories of the target course setting means 3 are renewed, and the coordinates of the target course are continuously stored therein. The divisions of the X-Y coordinates are selected in compliance with the magnification of the video camera.

In Fig.5 5 the current or instantaneous vehicle position is indicated at "P", and the video camera may be placed so as to permit the point "P" to appear at the center, lower point of the display screen. The trace of the vehicle from "P" to "0" represents the course actually followed by the vehicle under the control of the control 4 until the vehicle has come to the target course at point 0.

Also, it is possible to set a target course in consideration of the running condition of the vehicle as follows:

In case that the target course setting means 3 finds that the running speed measured by the speed sensor 5 is below a predetermined speed, the target course will be set in conformity with the road contour as seen from Fig. 6a.

When the running speed of the vehicle is higher than a predetermined speed, and when the vehicle is running a curved road as shown in Fig. 6b, a target course of reduced curvature OC is set so as to reduce the lateral force which is applied to the vehicle.

After setting a target course in the road, the control 4 will estimate a steering amount to permit the vehicle to follow the target course as follows:

Assume that a vehicle 13 at Point "P" is controlled to get on the target course OC.

First, the distance L(m) (L = v × T) on the X-axis which the vehicle can run in T seconds will be determined on the basis of the running speed of the vehicle v (m/s), which is determined by the speed sensor. Then, the lateral deviation Yℓ from Point "C" (on which the vehicle would be in T seconds if it travelled straight along the X-axis) to the target course OC will be estimated.

Second, the course AC which the vehicle is supposed to follow, will be estimated from the yaw rate γ (rad/sec), and then, the lateral deviation ym from Point "C" to the presumed course will be estimated by the following equation:${\text{ym = (-v × T}}^{\text{2}} \text{/2) × γ}$

The positive sign of yaw rate γ represents that the presumed course turns to the left whereas the negative sign of yaw rate γ represents that the presumed course turns to the right.

The yaw rate γ' to which the yaw rate of the vehicle is to be corrected will be determined from the following equation:${\text{δ' = δ + (γ'/v) × W (1 + Kv}}^{\text{2}} \text{)}$ where "W" stands for wheelbase, "K" is a constant which is determined both from the tire characteristics and the vehicle characteristics.

The steering control 8 is responsive to the steering amount 6' from the control 4 for issuing a drive command to the steerage drive 9, thereby causing the steerage drive 9 to steer the vehicle towards the target course.

The setting of the distance L on the X-axis may vary with the running speed of the vehicle under the control of the control 4. In particular, the distance L on the X-axis may decrease with the decrease of the running speed v of the vehicle, accordingly reducing the distance which the vehicle runs before getting on the target course OC, causing the vehicle to get on the target course OC as quickly as possible.

In case that the vehicle is running in a curved path, the distance L may decrease with the decrease of the curvature of the curved path, thereby causing the vehicle to get on the target course as quickly as possible.

A predetermined course pattern for a vehicle to follow from Point "P" to Point "O" on the target course may be advantageously used. This course pattern may be modified by a course factor which may be determined from the distance "L" and the running speed v to meet the particular situation. The vehicle can get on the target course smoothly by following the modified course pattern from Point "P" to Point "O" on the target course.

One example of the course pattern is given by y = x - sin x, and another example is given by y = x³.

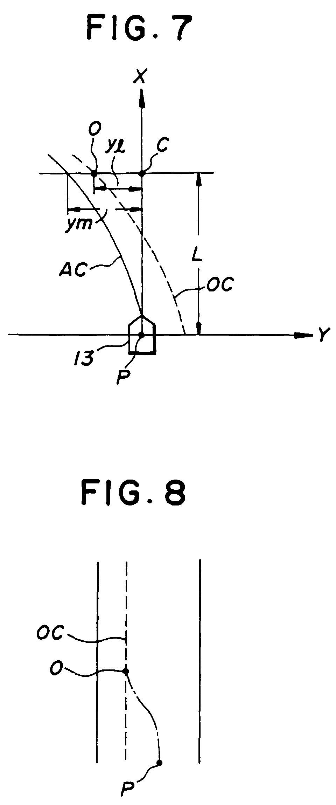

Fig. 8 shows a course pattern represented by y = x - sin x.

The processes described above are repeated at every interval of several seconds to permit the vehicle to run along the target course automatically.

An automatic travelling apparatus according to the present invention is capable of determining the road edge from images taken by the image pickup device or video camera and showing the sight of the area extending ahead of a running vehicle; making a search for a permissible travelling area on the basis of the so determined road edge; setting a target course in the permissible travelling area; determining on the basis of the instantaneous running condition of the vehicle, a steering amount by which the vehicle must be controlled to go into the target course; and controlling the vehicle in terms of the steering amount.

The automatic travelling apparatus uses a two-stage course determination in which first, a target course is set in a permissible travelling area, and then a tentative course is determined to follow before the vehicle goes into the target course, thereby improving the accuracy with which the automatic travelling can be performed.

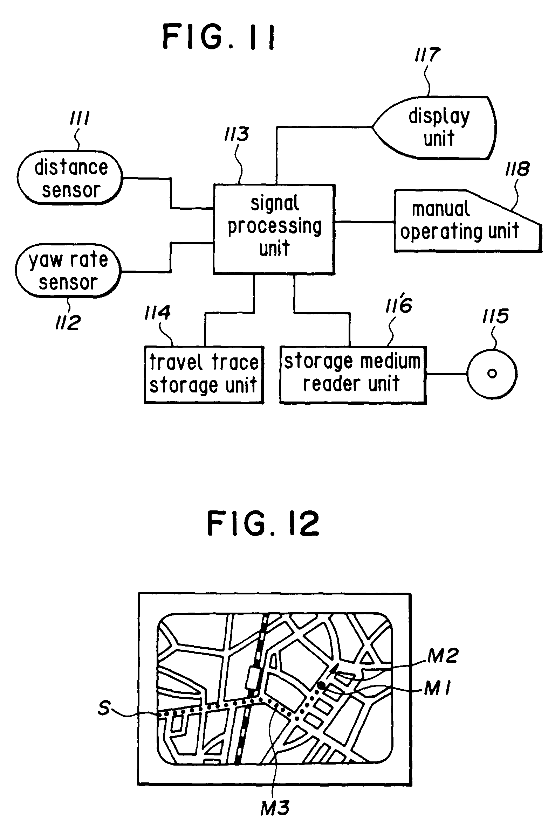

The target course setting means 3 of the automatic travelling apparatus shown in Fig. 1 is responsive to signals representing travelling information ND from a travelling system (See Fig. 11) for example, as to which way of a crossing the vehicle should take, for setting a target course OC most appropriate for the situation as follows:

The target course setting means 3 sets a target course OC in response to signals ND from a travelling system (See Fig. 11) informing a car for example, which way of a Y-branch the vehicle must take as follows:

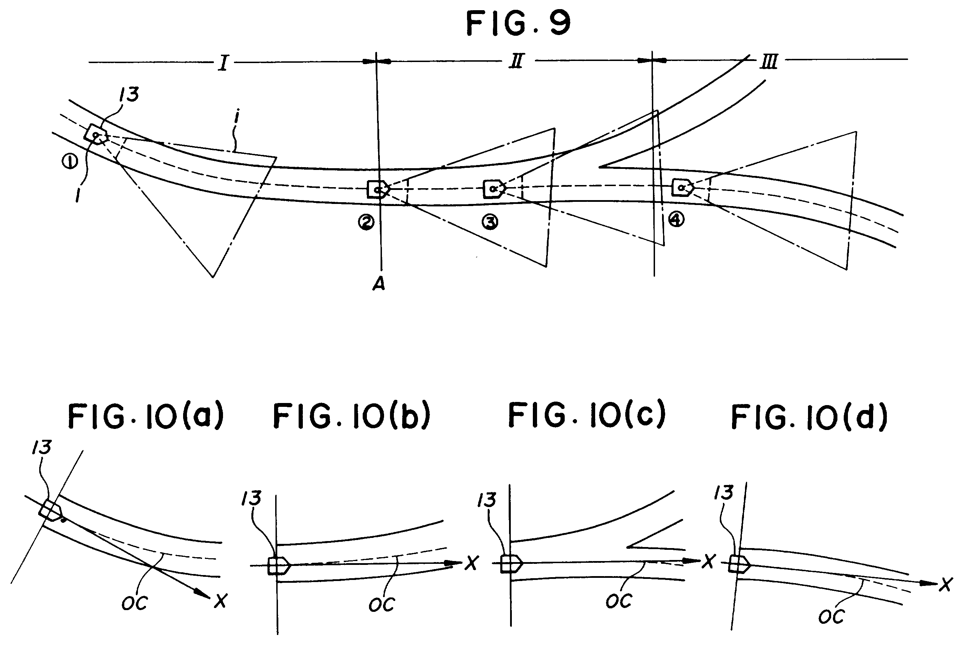

Referring to Fig. 9, the vehicle is approaching to a Y-branch.

While the vehicle is running in an ordinary travelling area of relatively narrow width I in Fig. 9, a target course OC is set on the center line of the travelling area, as shown in Fig. 10(a).

In Fig. 9 each triangular area i (broken lines) indicates the area whose image can be taken by a video camera 1 of the vehicle 13.

When the vehicle is approaching to a Y-branch as indicated by II in Fig. 9, the travelling system having necessary travelling informations inputted therein, will send a command ND such as "Take the right way of the Y-branch appearing ahead of the car. " to the target course setting means 3 at the time when the vehicle has come to Position A a predetermined distance apart from the Y-branch. According to the command from the travelling system the target course setting means 3 sets a target course OC gradually approaching from Position A to the right way as shown in Fig. 10 (b). When the video camera catches the sight of the Y-branch ahead, the target course setting means 3 sets a target course OC extending in the right way of the Y-branch.

After the vehicle runs in the right way of the Y-branch, and after the vehicle enters an ordinary travelling area of relatively narrow width indicated at III in Fig. 9, the target course setting means 3 returns to the ordinary operation, setting a target course OC on the center line of the way.

The part (1) in Fig. 9 corresponds to Fig. 10 (a); the part (2) in Fig. 9 corresponds to Fig. 10 (b); the part (3) in Fig. 9 corresponds to Fig. 10(c) and the part (4) in Fig. 9 corresponds to Fig. 10(d).

Fig. 11 shows a travelling system as comprising distance sensor 111, yaw rate sensor 112, signal processing unit 113, travel path storage unit 114, map storage medium 115, storage medium reader unit 116, display unit 117, and operating unit 118. A photoelectric distance measuring unit which is capable of generating a pulse signal per unit travelling distance in response to rotation of the tires of a vehicle, an electromagnetic type of distance measuring unit or a mechanical contact type of distance measuring unit may be used as a distance sensor 111. The yaw rate sensor 112 may comprise a gyroscope which is capable of generating a signal representing the angular velocity increment in the yaw direction while the vehicle is running. The signal processing unit 113 (computer-aided control) includes a CPU, ROMs for programming, RAMs for controlling etc. The CPU is capable of counting pulse signals from the distance sensor 111 to determine the travelling distance; determining the change of travelling direction from signals from the yaw rate sensor 112; estimating on the basis of these variables thus determined, the instantaneous position of the vehicle on the X-Y coordinates every time the vehicle has run a unit distance. The travel path storage unit 114 is capable of storing instantaneous car position data from the signal processing unit 113. The map storage medium 115 has digitalized map information stored in the form of files. The storage medium reader unit 116 selectively reads necessary map information from the map storage medium 115. The display unit 117 shows a map thus retrieved from the storage medium, and at the same time, the travel path of the vehicle, the instantaneous position of the vehicle and the direction in which the vehicle is presumed to travel on the map. The operation unit 118 permits selection of map to be displayed, setting of the start position in the map appearing on the screen of the display unit, and inputting of selected commands from the travelling system for guiding the vehicle along a target course on the map.

As best seen from Fig. 12, a selected map appears on the screen of the display unit 117. In the map a first mark M1 indicates the instantaneous position of the vehicle on the X-Y coordinates (the instantaneous position on the X-Y coordinates being determined from the travelling distance from the start position times the reducing scale factor of the map); a second mark M2 indicates the direction in which the vehicle is going; and a series of third marks M3 indicate the trace of the vehicle.

When the operating unit 118 is operated to input travelling commands ND to the target course setting means 3 to permit the vehicle to follow a target course in the map appearing on the screen of the display unit, points a, b and c can be put in the map to indicate particular crossings or branches, and then commands such as "Turn to the left. " or "Turn to the right" can be given when the vehicle is approaching such a point in the map.

The signal processing unit 113 reads each travelling command to issue an appropriate command ND for example, "Take the right way of the Y-branch appearing ahead of the vehicle." at the time when the instantaneous position mark M1 has come to be a given constant distance D apart to the point a.

Alternatively, in place of inputting travelling commands as described above, a departing point and an arrival point on the map are inputted and indicated, and then a possible shortest course on short cut from the departing point to the arrival point can be automatically determined by computer processing in the travelling system. In this case when the vehicle is coming close to a crossing or branch on the so determined course, a signal representing a necessary travelling information ND indicating which way of the crossing or branch the vehicle must take, will be sent to the automatic travelling apparatus.

A telescopic range camera 11 and a wide-angle camera 12 are included in a video camera system fixed to a vehicle, and these cameras are selectively used under the control of the permissible travelling area determining means 2 in response to a signal RD representing the characteristics of road, such as crossing, branch, straight road, zigzag road etc.

The travelling system permits the setting of a selected course on a map appearing on the screen of the display and the inputting of road information RD pertaining to the kinds of road such as crossing, branch, straight road, zigzag road etc. When the vehicle is approaching an indicated crossing for example, the relevant road information will be outputted.

Once a departing point and an arrival point have been inputted and set in a map which appears on the screen of the display, a possible shortest course from the departing point to the arrival point can be automatically determined by computer processing in the travelling system.

The permissible travelling area determining means 2 is responsive to a signal RD representing a crossing from the travelling system for selecting the wide-angle camera 12 to make a search for the indicated crossing by sweeping over the relatively wide range. When the permissible travelling area determining means 2 receives a signal RD representing a straight road from the travelling system, the telescopic range camera 11 will be selected to have a possible distant sight of the straight road. When the permissible travelling area determining means 2 receives a signal RD representing a zigzag road from the travelling system, the wide-angle camera 12 will be again selected to have a full sight of the zigzag road.

Also, a telescopic range camera having a zooming capability may be advantageously used for moving from a distant to close-up view of an elongated straight road.

When the instantaneous vehicle position mark M1 is a predetermined distance D apart from a marked point "a", the signal processing unit 113 permits a voicing apparatus (now shown) for example, to inform a driver of necessary oral command by uttering for example, "Take the right way of the Y-branch appearing ahead of the vehicle.", and at the same time, the signal processing unit 113 gives the road information of the Y-branch to the permissible travelling area determining means 2.

In place of using the operating unit 118 to select particular crossings or branches in a selected travelling course, and in place of inputting informations RD pertaining to the road characteristics of the selected crossings or branches, map informations and other necessary informations RD pertaining to locations and road characteristics of selected crossings or branches may be stored in the map information storing medium, and when a vehicle mark representing the instantaneous position in the map which appears on the screen of the display, approaches such a selected crossing or branch, necessary informations may be retrieved from the map information storing medium, and supplied to the permissible travelling area determining means 2 under the control of the signal processing unit 113.

It is not necessary to equip the travelling system with a distance sensor 111 because the speed sensor 5 of the automatic travelling apparatus shown in Fig. 1 may be used to estimate the distance which the vehicle has run. Also, it is not necessary to equip the travelling system with a yaw rate sensor 112 because the yaw rate sensor 6 of the automatic travelling apparatus shown in Fig. 1 may be used in common.

As may be understood from the above, an automatic travelling apparatus according to the present invention permits determination of permissible travelling area on the basis of images taken by an image pickup device or video camera, showing the sight of the area appearing ahead of the vehicle; steering control of the vehicle to go into a target course in the permissible travelling area; and selection of a predetermined way of a selected crossing or branch in the target course. These complicated determination and control can be easily performed without fail.

Also, when an image pickup device or video camera take images of the area extending ahead of the vehicle for determining a permissible travelling area, a wide-angle camera, a telescopic range camera and an ordinary camera are selectively used to meet particular situations for example, taking pictures of a crossing, zigzag way or straight long way. This selective use of cameras of different characteristics permits correct identification of particular roads with those stored in the map storage.

## Claims

1. Automatic travelling apparatus, comprising:
an image pick-up device (1; 11, 12) attached to the vehicle (13);
means (118) for presetting course information as to which way of a crossing or branch the vehicle takes by presetting a route or by specifying a destination;
means (113) for determining an instantaneous vehicle position on the basis of signals from travelling distance and travelling direction sensor means (111, 112);
means (113) for outputting relevant course information (ND) prestored within a storage medium (115), said relevant course information (ND) being associated with a crossing or a branch ahead of the vehicle (13) and being outputted when, according to said instantaneous vehicle position, the vehicle (13) is at a predetermined distance (D) from said crossing or branch);
identification means (2) for identifying the crossing or branch appearing ahead of the vehicle on the basis of images taken by the image pick-up device (1; 11, 12) and showing the sight of the area extending ahead of the vehicle; and
control means (3, 4) for reading the relevant course information (ND) outputted and controlling the vehicle with reference to the information of the identified crossing or branch so as to permit the vehicle (13) to take the indicated way of the crossing or branch;
characterized by said control means comprising target course setting means (3) responsive to said relevant course information (ND), said target course setting means (3) setting a target course (OC, figure 10b) gradually approaching the indicated way of the crossing or branch upon the output of said relevant course information (ND) before the image pick-up device has actually recognised the crossing or branch, said target course setting means (3) setting a target course (OC, figure 11c) extending in the indicated way of said crossing or branch upon identification of said crossing or branch by said identification means (2), said control means (3, 4) controlling the vehicle to travel along said target course (OC).

2. Automatic travelling apparatus according to claim 1, characterized in that means (113) for outputting relevant road information (RD) prestored in said storage medium, and means (2) for selecting the image-taking characteristics of the image pick-up device (1; 11, 12) in accordance with the prestored road information (RD) outputted are provided.

3. Automatic travelling apparatus according to claim 2, characterized in that the image-taking characteristics of the image pick-up device (1; 11, 12) are wide-angle, telescopic range or ordinary.

## Patentansprüche

1. Automatische Fahrvorrichtung, umfassend:
eine an dem Fahrzeug (13) angebrachte Bildaufnahmevorrichtung (1; 11, 12);
ein Mittel (118) zum Vorsetzen von Kursinformation darüber, welchen Weg einer Kreuzung oder Abzweigung das Fahrzeug nimmt, durch Vorsetzen einer Route oder durch Bestimmen eines Ziels;
ein Mittel (113) zum Bestimmen einer momentanen Fahrzeugposition auf der Grundlage von Signalen von Fahrentfernungs- und Fahrrichtungssensormitteln (111, 112);
ein Mittel (113) zum Ausgeben von innerhalb eines Speichermediums (115) vorgespeicherter relevanter Kursinformation (ND), wobei die relevante Kursinformation (ND) einer Kreuzung oder Abzweigung vor dem Fahrzeug (13) zugeordnet ist und dann ausgegeben wird, wenn sich das Fahrzeug (13) gemäß der momentanen Fahrzeugposition in einer vorbestimmten Entfernung (D) von der Kreuzung oder der Abzweigung befindet;
ein Identifikationsmittel (2) zum Identifizieren der vor dem Fahrzeug auftretenden Kreuzung oder Abzweigung auf der Grundlage von durch die Bildaufnahmevorrichtung (1; 11, 12) aufgenommenen Bildern, die die Ansicht des sich vor dem Fahrzeug erstreckenden Bereichs zeigen; und
ein Steuermittel (3, 4) zum Lesen der ausgegebenen relevanten Kursinformation (ND) und zum Steuern des Fahrzeugs in Bezug auf die Information über die identifizierte Kreuzung oder Abzweigung derart, daß ermöglicht wird, daß das Fahrzeug (13) den angegebenen Weg der Kreuzung oder Abzweigung nimmt;
**dadurch gekennzeichnet**, daß das Steuermittel ein auf die relevante Kursinformation (ND) ansprechendes Zielkurssetzmittel (3) umfaßt, wobei das Zielkurssetzmittel (3) - nach Ausgabe der relevanten Kursinformation (ND) und vor dem tatsächlichen Erkennen der Kreuzung oder Abzweigung durch die Bildaufnahmevorrichtung - einen Zielkurs (OC, Fig. 10b) setzt, der sich allmählich dem angegebenen Weg der Kreuzung oder Abzweigung nähert, wobei das Zielkurssetzmittel (3) einen Zielkurs (OC, Fig. 11c) setzt, der sich nach Identifikation der Kreuzung oder Abzweigung durch das Identifikationsmittel (2) in den angegebenen Weg der Kreuzung oder Abzweigung erstreckt, wobei das Steuermittel (3, 4) das Fahrzeug derart steuert, daß es entlang dem Zielkurs (OC) fährt.

2. Automatische Fahrvorrichtung nach Anspruch 1, dadurch gekennzeichnet, daß ein Mittel (113) zum Ausgeben in dem Speichermedium vorgespeicherter relevanter Weginformation (RD) und ein Mittel (2) zum Wählen der Bildaufnahmecharakteristika der Bildaufnahmevorrichtung (1; 11, 12) in Übereinstimmung mit der ausgegebenen vorgespeicherten Weginformation (RD) vorgesehen sind.

3. Automatische Fahrvorrichtung nach Anspruch 2, dadurch gekennzeichnet, daß als Bildaufnahmecharakteristika der Bildaufnahmevorrichtung (1; 11, 12) die Charakteristika Weitwinkel, Telebereich oder Normal vorgesehen sind.

## Revendications

1. Appareil pour se déplacer automatiquement comprenant :
un dispositif capteur d'images (1 ; 11, 12) fixé au véhicule (13) ;
un moyen (118) pour préétablir des informations de trajet sur le chemin d'un croisement ou d'un embranchement que prend le véhicule par préétablissement d'un itinéraire ou par spécification d'une destination ;
un moyen (113) pour déterminer une position instantanée du véhicule selon des signaux provenant de moyens capteurs de distance de déplacement et de direction de déplacement (111, 112) ;
un moyen (113) pour sortir des informations de trajet pertinentes (ND) préstockées sur un support de mémoire (115), lesdites informations de trajet pertinentes (ND) étant associées à un croisement ou un embranchement devant le véhicule (13) et étant sorties quand, conformément à ladite position instantanée du véhicule, le véhicule (13) est à une distance prédéterminée (D) dudit croisement ou embranchement ;
un moyen d'identification (2) pour identifier le croisement ou l'embranchement apparaissant devant le véhicule selon des images prises par le dispositif capteur d'images (1 ; 11, 12) et montrer la vue de la zone s'étendant devant le véhicule ; et,
des moyens de commande (3, 4) pour lire les informations de trajet pertinentes (ND) sorties et commander le véhicule en référence aux informations sur le croisement ou l'embranchement identifié de manière à permettre au véhicule (13) de suivre le chemin indiqué du croisement ou de l'embranchement ;
caractérisé par lesdits moyens de commande comprenant un moyen d'établissement de trajet recherché (3) qui réagit auxdites informations de trajet pertinentes (ND), ledit moyen d'établissement de trajet recherché (3) établissant un trajet recherché (OC, Figure 10b) s'approchant graduellement du chemin indiqué du croisement ou de l'embranchement à la sortie desdites informations de trajet pertinentes (ND) avant que le dispositif capteur d'images ait effectivement reconnu le croisement ou l'embranchement, ledit moyen d'établissement de trajet recherché (3) établissant un trajet recherché (OC, Figure llc) s'étendant sur le chemin indiqué dudit croisement ou embranchement lors de l'identification dudit croisement ou embranchement par ledit moyen d'identification (2), lesdits moyens de commande (3, 4) commandant le véhicule pour qu'il se déplace le long dudit trajet recherché (OC).

2. Appareil pour se déplacer automatiquement selon la revendication 1, caractérisé en ce que sont fournis un moyen (113) pour sortir des informations de route pertinentes (RD) préstockées sur ledit support de mémoire, et un moyen (2) pour sélectionner les caractéristiques de prise d'image du dispositif capteur d'images (1 ; 11, 12) conformément aux informations de route préstockées (RD) sorties.

3. Appareil pour se déplacer automatiquement selon la revendication 2, caractérisé en ce que les caractéristiques de prise d'image du dispositif capteur d'images (1 ; 11, 12) sont celles d'une grande ouverture, d'une portée à grande distance ou normales.
